# EUROPEAN PATENT APPLICATION

(11) **EP 1 050 719 A2**
(43) Date of publication of application: **08.11.2000**
(21) Application number: 00870017.1
(22) Date of filing: 11.02.2000
(51) Int. Cl.: F24D 12/02, F28D 20/00

(54) **Heating element for use in a chimney**

(30) Priority: 05.05.1999 BE 9900320; 12.05.1999 NL 1012046
(71) Applicant: Dermaut, Daniel, 9790 Wortegem-Petegem (BE)
(72) Inventor: Dermaut, Daniel, 9790 Wortegem-Petegem (BE)

(57) **Abstract**

Before, when I stove was used for heating, the adjacent rooms were unheated so that the stove had to be set at a higher position, e.g. position 3, to have a comfortably heated house.

Thanks to this new way of heating with an element and radiators, the adjacent places are also heated and the room where the stove is installed does not cool down easily, so that the stove can be set at the lowest position.

This results in much lower energy consumption than before. The system does not require any special maintenance (no heating boiler needed).

The installation of the system is both easy and cheap.

## Description

When a stove (1) burns on heating oil, gas, wood or coals, heat is released through the exhaust gases. In most cases these gases are discharged through the chimney and are wasted.

When an element (2) guiding the gasses to the outside and equipped with a spiral (3) consisting of a copper pipe, is built into the chimney, it is possible to recuperate large part of the heat that otherwise would be lost.

Connecting this element (2) to the radiators (4), which preferably consist of single-walled elements in order to have the smallest water content possible and interconnecting a circulation pump (6), which causes the water to circulate, it is possible to heat other rooms (5) with the heat coming from that stove and that otherwise would have been lost.

For certain stoves, e.g. wood or coal stoves, the spiral is mounted into a stainless steel tube to make it easier to clean the chimney.

| | | | |
|---|---|---|---|
| Key page 6 | | | |
| 1) | Stove | 4) | Radiators |
| 2) | Elements | 5) | Rooms |
| 3) | Spiral | 6) | Circulation pump |

### Conclusion: Heating Element for use in a chimney (see drawing page 7)

The element consists of two parts. The core (3) is a spiral drawn from a copper tube with a length between 25 to 50 meter or more. It can have a finished length varying from two to three meters depending on the capacity (kcal/h) of the stove, which is already available from -6000 kcal/h up to +12000 kcal/h, and depending on the number of rooms and their size.

The intermediate distance of the spiral coils is also variable namely from 8 mm to 15 mm. The tube diameter (3), from which the spiral is drawn, can also vary depending on the capacity (kcal/h) of the stove and the spaces that have to be heated. The tube can have a diameter from 8 mm to 15 mm.

The outer part of the jacket (6) consists of a stainless steel tube with a diameter from 120 mm to 150 mm depending on the type of chimney.

The jacket (6) is made of stainless steel since the liquid in the spiral (3) cools down forming condensation on the outside of the spiral (3). The condensation evaporates and settles on the jacket (6) thus causing rust.

### Refer to drawing page 8

As example a test has been carried out involving the following materials. A stove of the trademark Well Straler built-in fireplace has been used.

| Mk 10 (1) | |
|---|---|
| Capacity kW | 11.6 |
| Capacity kcal | 10,000 |
| Capacity m³ | 100 - 150 |

The following element has been attached to the stove: a copper tube with a length of 50 meters and a diameter of 10 mm has been drawn in spiral with an inner diameter of 10 cm, an intermediate distance between the coils of 1 cm and with 125 coils in total. The overall finished length is two meters and a half(2).

The spiral has been pushed into a stainless steel tube of 139 mm fitted at the bottom with an adaptation sleeve (4) to 125 mm in order to be connected to the stove.

The total weight of the unit is sixteen kilos.

Two holes with a diameter of 10 mm have been drilled into the stainless steel tube at 40 cm above the ends in view of the connection (5). The connection can be made at any height. Tubes have been fitted at the spiral ends by means of a sleep coupling with a straight taper from 10 mm to 15m.

Thanks to this system any handyman can make the connection. The connection from the radiators to the spiral consists of copper tubes with a diameter of 15 mm (7), in order to reduce resistance. The radiators are connected in series. The circulation pump (8) is of the trademark UPS 25-40 180 and runs at the lowest rpm possible, which allows maximal heating of the water in the spiral.

This system has been used for heating:
2 child's rooms of 4 by 4 meters (9)
1 bath room of 3 by 3 meters (10)
1 office of 2.5 by 4 meters (11)
1 hall of 6.50 by 7.50 meters (12)
1 kitchen of 4 by 5 meters (13)
at a temperature of:
when it is +4 °C outside and
- The stove is set at position 1: 20 °C
- The stove is set at position 2: 22 °C
- The stove is set at position 3: 23 °C
- The stove is set at position 4: 25 °C
- The stove is set at position 5: 27 °C
- The stove is set at position 6: 28 °C

The radiators are of the trademark VEHA type 10 (14), these are single-walled radiators with a thickness of 17 mm. The radiators in the bedrooms had a height of 285 mm and a length of 1944 mm. The radiator in the hall had a height of 500 mm and a length of 1944 mm. The radiator in the office had a height of 800 mm and a length of 648 mm. The radiator in the bathroom has a height of 400 mm and a length of 1134 mm. The total surface of radiators is 3.10 m². This allows you to heat the rooms agreeably without consuming more energy.
Refer to drawing page 8.

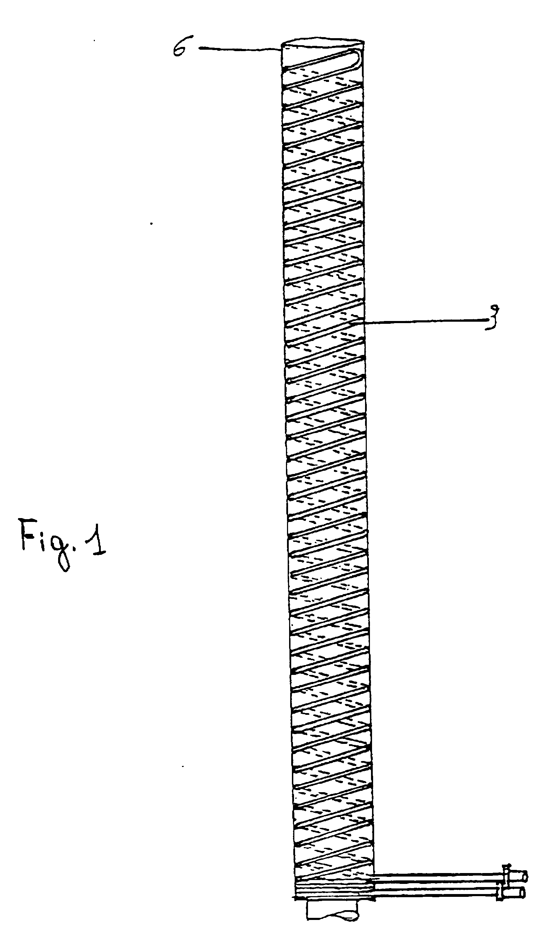

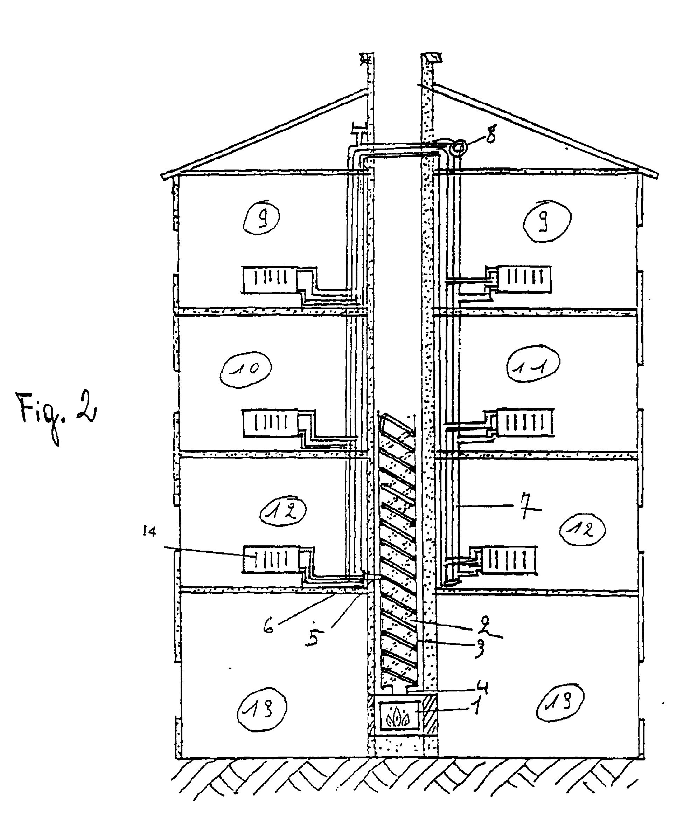

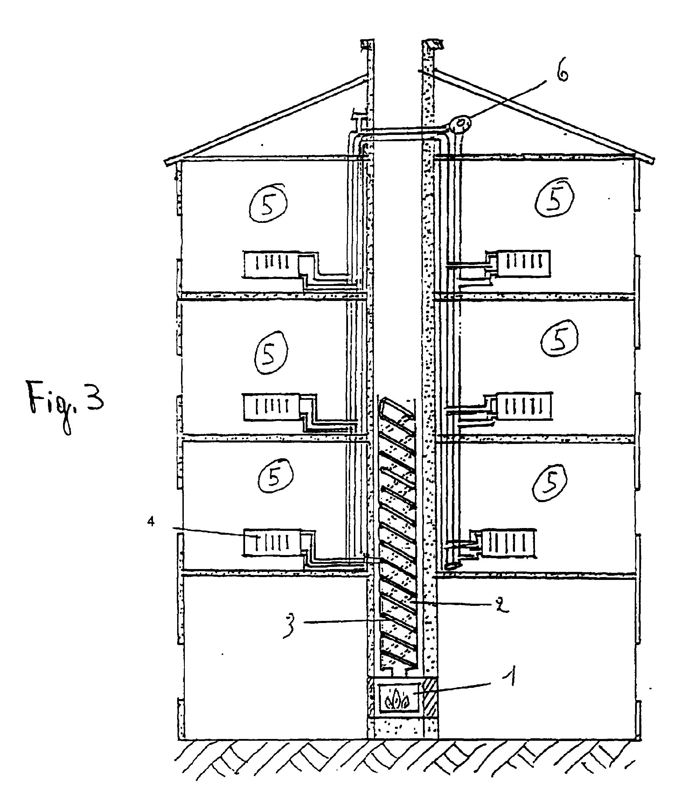

## Claims

1. The invention concerns a device for additional heating of a number of rooms in a house without consuming extra fuel.
This system has been especially designed to have a low weight, the spiral drawn from a copper tube has a very good thermal conductivity. Its diameter and length can vary depending on the capacity needed.
The jacket is made of stainless steel and can have a different length or diameter depending on the chimney or on the capacity required for heating up that specific number of radiators.
The stainless steel tube fitted inside the spiral for coal and wood stoves has been adjusted to the inner diameter of the spiral.
